Europäisches Patentamt

European Patent Office

Office européen des brevets

(11) Publication number: **0 489 967 A1**

# EUROPEAN PATENT APPLICATION

(21) Application number: **90124202.4**

(22) Date of filing: **14.12.90**

(51) Int. Cl.⁵: **B01J 20/26**

A request for correction of description and claims has been filed pursuant to Rule 88 EPC. A decision on the request will be taken during the proceedings before the Examining Division (Guidelines for Examination in the EPO, A-V, 2.2).

(43) Date of publication of application:
**17.06.92 Bulletin  92/25**

(84) Designated Contracting States:
**BE CH DE FR GB IT LI NL**

(71) Applicant: **SANYO CHEMICAL INDUSTRIES LTD.**
**11-1, Ichinohashinomoto-cho**
**Higashiyama-ku, Kyoto-shi**
**Kyoto 605(JP)**

(72) Inventor: **Tanaka, Keiji, Sanyokasei-Kogyo K.K.**
**11-1, Ichinohashinomoto-cho**
**Higashiyama-ku, Kyoto-shi 605(JP)**
Inventor: **Sakakibara, Megumu, Sanyokasei-Kogyo K.K.**
**11-1, Ichinohashinomoto-cho**
**Higashiyama-ku, Kyoto-shi 605(JP)**

(74) Representative: **Kador & Partner**
**Corneliusstrasse 15**
**W-8000 München 5(DE)**

(54) **Mouldable water absorbent resin compound.**

(57) A mouldable water absorbent resin composition comprising thermoplastic or solvent soluble resin and water absorbent resin particles dispersed therein. Average particle size of the water absorbent resin particles is less than 1 μm under dried state and the particles have water absorbency of from 10 to 1000g/g.

The resin composition may be mouldable into any shape, its absorbable water content is equal to 10 to 80000 wt% based on it own weight. In the present invention, the particles have a good compatibility with mouldable resin.

Therefore, the particles do not separate from the mouldable resin easily and are not lost and come off from the mouldable resin.

EP 0 489 967 A1

## Background of the invention

[Field of the invention]

The invention relates to a mouldable water absorbent resin composition.

[Description of Prior art]

A conventional water absorbent resin is normally a nonmouldable resin because of 3 dimensionally crosslinked high molecular type.

For the purpose of moulding into any shape using such kind of resin, said water absorbent resin being prepared into fine particles has to be made dispersed within a mouldable resin of any kind.

The water absobent resin particles of conventional type are typically featured with an average particles size exceeding 1 $\mu$m under dried state and are found inferior in compatibility and dispersibility when to be made dispersed into mouldable resin. Therefore, the moulded articles separate and lose a larger amount of hydrogel of the water absorbent resin particles, resulting in a statistical variation in water content and degradated surface quality.

## Summary of the invention

As a solution of above problems, the invention provides excellent mouldable water absorbent resin composition.

Namely, present invention relates to a mouldable water absorbent resin composition comprising thermoplastic resin or solvent soluble resin and water absorbent resin particles dispersed therein, wherein said water abosorbent resin particles have average particle size of less than 1 $\mu$m under dried state and have water absorbency of from 10 to 1000 g/g, wherein said resin compostion may be mouldable into any shape, its absorbable water content is equal to 10 to 8000% based on its own weight at the moulded state and possible loss of hydrogel of said water absorbent resin particles from moulded resin composition is maintained to a level a less than 10% at the equilibrated state in water content.

[Detailed Description of the invention]

The water absorbent resin particles under the present invention may not be specifically defined in composition and preparation process, as long as the conditions are complied with that the average particle size is less than 1 $\mu$m under dried state and the water absorbency is ranged from 10 to 1000 g/g. Where the averaged particle size of 1 $\mu$m under dried state is exceeded, the product evolved therefrom will be largely restricted in its applicability, since lower compatibility with a thermoplastic resin or solvent soluble resin and separation of hydrogel and loss of hydrogel of the water absorbent particles from moulded articles will be increased when the moulded articles absorbed water. Where the water absorbency of water absorbent resin particles is reduced to a level less that 10 g/g, the content of water absorbent resin particles within resin mixture has to be increased. Terefore, it is difficult to maintain the desired water absorbency of the moulded products, and it results in a difficulty while in the moulding operation and an increased separation and loss of hydrogel from the moulded articles. Where contrary to the above, the water absorbency of 1000 g/g is exceeded, the water absorbency of the moulded articles will be reduced as the absorption function will not work well due to lessened gel-strength in the products containing water.

As the exemple of resin of the water absorbent resin particles, a crosslinked high molecular compound having anionic group, a crosslinked high molecular compound having cationic group, a nonionic crosslinked high molecular compound and an amphoteric crosslinked high molecular compound having both anionic group and cationic group may be illustrated. As the crosslinked high molecular compound having anionic group, a crosslinked polymer comprising anionic vinyl monomer and where required nonionic monomer as well as crosslinking agent may be illustrated.

Referring to the anionic vinyl monomer, any kind of anionic monomer may be used, but those containing carboxyl- and/or sulfon-groups may be preferable.

Examples of anionic vinyl momomers with carboxyl-group are unsaturated mono- or polycarbonic acid [for example, (meth)acrylic acid (hereinafter referred to as acrylic acid and (or methacrylic acid), ethacrylic acid, crotonic acid, sorbinic acid, maleic acid, itaconic acid, cinnamic acid, etc.], anhydride thereof [maleic anhydride, etc.] and salt thereof [alkaline metal salt (salt of sodium, potassium, lithium. etc.), salt of alkaline earth metal (salt of calcium, magnesium. etc.), ammonium salt and amine salt (salt of alkyl amine such as methyl amine, trimethyl amine, etc.; salt of alkanol amine such as triethanol amine, diethanol amine, etc. or the like)] and mixtures from more than 2 of above mentioned momomers. Of these alkaline metal salts of (metha) acrylic acid are preferabl.

Examples of anionic vinyl monomers with sulfon-group are aliphatic- or aromatic vinyl sulfonic acids [for example, vinyl sulfonic acid, allyl sulfonic acid, vinyl toluene sulfonic acid, styrene sulfonic acid, etc.], (meth)acryl sulfonic acid [for example, (meth)acrylic acid sulfoethyl, (meth)acrylic acid sulfopropyl, etc.], (meth)acrylamide sulfonic acid [for example, 2-acrylamide-2-methylpropane sulfonic acid, etc.], and salts thereof [for example, alkaline metal salt (salts of sodium, potassium, lithium, etc.), salt of alkaline earth matal (salts of calcium, magnesium, etc.), ammonium- and amine salts (salt of alkyl amine such as methylamine, trimethyamine, etc.; salts of alkanol amine such as triethanolamine, diethanolamine)] and mixtures from more than 2 of abovementioned monomers.

Of these alkaline metal salts of (meth)acrylamide sulfonic acid may be preferably made in use.

As noninic water soluble vinyl monomers which to be used when required, hydroxyethyl (metha) acrylate, hydroxypropyl-(meth)acrylate, (meth)acrylamide, vinyl pyrrolidon, etc., may be illustrated for example.

Proportion of anionic vinyl monomer within polymers made of the aforementioned nonomers normally exceeds 10 mole%, preferably 50 mole%.

To obtain a crosslinking polymer, crosslinking agent may be used. For this purpose the compound (1) with at least 2 polymerisable double bonds or the compound (2) with one polymerisable double bond and at least one group which is reactive with the functional group of cationic- and/or anionic vinyl monomer may be made in use.

Involved in the group of the compound (1) are:

(1) Bis-(metha)-acrylamide:

N,N-Alkylene($C_1 \sim C_6$)-bis-(meth)-acrylamide such as N,N-methylen-bis-acrylamide.

(2) Di- or polyester from polyol and unsaturated mono- or polycarboxilic acid: di- or tri-(met)acrylic acid ester of polyols [such as ethylene glycol, trimethylolpropane, glycerin, polyoxyethylene glycol, polyoxypropylene glycol, etc.]; unsaturated polyester [which is obtainable through the reaction of polyols with unsaturated acid such as maleic acid, etc.], di- or tri-(meth)acrylic acid ester [which is obtainable through the reaction of polyepoxied and (meth)acrylic acid], etc.

(3) Carbamyl ester: those which are obtainalbe through the reaction of polyisocyanate [such as tolylene diisocyanate, hexamethylendiisocyanate, 4,4'-diphenylmethandiisocyanate, prepolymer with NCO-group (which is obtainable through reaction of polyisocyanate with compound having active hydrogen atoms), etc.] with hydroxyethyl (meth)acrylate.

(4) Di- or polyvinyl compound: divinylbenzene, divinyltoluene, divinylxylene, divinylether, divinylketone, trivinylbenzene, etc.

(5) Di- or poly-(meta)-allylether of polyols:

for instance, polyethylenglycol-diallylether and allylated starch, allylated cellulose. [wherein illustrative polyol is, for instance, alkylenglycol, glycerin, polyalkylene glycol, polyalkylene-polyol, carbohydrate, etc.]

(6) Di- or polyallylester of polycarboxylic acid: diallylphthalate, diallyadipate, etc.

(7) Ester from unsaturated mono- or polycarboxylic acid and mono-(metha) allylether of polyol: (meth)-acrylic acid ester of polyethylenglycolmonoallylether, etc.

(8) polyallyloxylalkanes: tetraallyloxylethane, etc.

As examples of the compound (2) are: ethylenically unsaturated compound having reactive groups with carboxyl-, sulfon- and/or quaternary ammonium salt group. Example of such reactive groups are, for instance, hydroxyl-, epoxy- or tertiary amino-group, etc.

As examples of the compound (2) are unsaturated compound with hydroxyl-group [such as N-methylol (meth)acrylamide, etc.], unsaturated compound with epoxy-group [glycidyl (meth)acrylate, etc.], unsaturated compound with tertiary amino-group [such as dimethylaminoethyl (meth)acrylate, diethylaminoethyl (meth) acrylate, etc.], etc.

Of these crosslinking agents, the compound (1) may preferably be made in use, particularly N,N'-methylen-bis-acrylamide, ethylenglycoldiacrylate, trimethylolpropanetriacrylate and tetraallyloxylethane are more preferred.

Amount of the crosslinking agent is normally 0.01 to 10 wt %, preferably 0.1 to 5 we % of the total weight of vinyl monomer with carboxyl- or sulfon-group and nonionic monomer which to be added thereto when required.

To be involved in polymers which to be made from the said monomers are crosslinked sodium polyacrylate, crosslinked poly-2-acrylamide-2-methylpropanic acid or ordinary anionic highly water absorbent resin [e.g. hydrolysate of graftcopolymer from starch-acrylonitrile, neutralized graftpolymer of starch-acrylic acid, saponified copolymer of acrylate-vinyl acetate, cross linked partially neutralized salt of polyacrylic acid, copolymer from cross linked isobutylene-maleic acid anhydride ] etc. Of these polymers, cross linked sodium polyacrylate or cross linked poly-2-acrylamide-2-methylpropanic acid may preferably be made in use.

For the methods of polymerization of vinyl monomer, any known methods may be used, e.g. polymerization of water solution or graft polymerization which polymerizes monomer solution in water together with crosslinking agent under the existence of starch or cellulose when required, reverse phase emulsion polymerization or suspension polymerization wherein monomers and crosslinking agent dissolved in water are emulsified or suspended in hydrophobic solvent (such as hexane, cyclohexane, toluene chlorobenzene, etc.) under the existence of dispersing agent if necessary, or spray polymerization wherein monomers and crosslinking agent dissolved into water are allowed to be sprayed into heated atmosphere, etc. Also initiating method by radiation ray, electron ray, or UV ray etc. are made available radical polymerization as known motheds.

To maintain averaged particle size under 1 μm of dried water absorbent resin particles, reverse phase emulsion polymerization may be advantageously made in use, whereby the said averaged particle size is obtainable through single operational process. The averaged particle size must be otherwise made to a level under 1 μm using mechanical means such as jet-mill, ultrasonic homoginizer, etc.

As cross linking high molecular compound with cationic-group, cross linking polymer made of cationic vinyl monomer added with nonionic monomer and cross linking agent when required, may be illustrated.

As cationic vinyl monomer, any type of cationic monomers may be available, preferably vinyl monomers having quaternary ammonium salt groups may be made in use.

Involved in the group of cationic vinyl monomer with quaternary ammonium salt groups are reactant from dialkylaminoalkyl (meth)acrylate and alkyl halide or dialkylsulfuric acid [e.g. (meth)acryloiloxyethyl-trimethylammonium chloride or -bromide,
(meth)acryloiloxyethyl-trimethylammonium methsulfate,
(meth)acryloiloxyethyl-dimethylethylammonium chloride,
(meth)acryloiloxyethyl-diethylmethylammonium cholride,
(meth)acryloiloxyethyl-dimethybenzylammonium cholride,
(meth)acryloiloxypropyl-trimethylammonium cholride,
(meth)acryloiloxypropyl-trimethylammonium methsulfate, etc,] ;
reactant from dialkylaminohydroxyalkyl (meth)acrylate and alkyl halide or dialkylsulfuric acid [e.g. (meth)-acryloiloxyhydroxyethyl-trimethylammonium chloride or -bromide,
(meth)acryloiloxyhydroxyethyl-trimethylammonium methsulfate,
(meth)acryloiloxyhydroxypropyl-trimethylammonium chloride etc.];
reactant from dialkylaminoalkyl (meth)acrylamide and alkylhalide or dialkylsulfuric acid [e.g. chloride or bromide of trimethylaminethyl (meth)acrylamide, chloride of trimethylaminopropyl (meth)acrylamide, chloride of diethylmethylaminopropyl (meth)acrylamide, etc.]; reactant from dialkylaminohydroxyalkyl (meth)-acrylamide and alkyl halide or dialkylsulfuric acid [e.g. chloride of trimethylaminohydroxyethyl (meth)-acrylamide, chloride of trimethylaminohydroxypropyl (meth)acrylomide, chloride of diethylmethylamino-hydroxypropyl (meth)acrylamide, etc.]; N-alkylvinylpiridinium halide [e.g. N-methyl-2-vinylpiridinium chloride or bromide, N-methyl-4-vinylpiridinium chloride, etc.], trialkylallylammonium halide [e.g. trimethylallylammonium chloride or -bromide, triethylallylammonium chloride, etc.] and mixtures of more than 2 of the above. The reactant from dialkylamino (meth)acrylate and alkyl halide are preferable.

The proportion of cationic vinyl monomer within the polymer from the aforementioned monomers usually exceeds 10 mole %, preferably 50 mole %.

Sort and amount of nonionic vinyl monomer and crosslinking agent which to be used when required may be equivalent to those which are disclosed in the paragraph of anionic vinyl monomer.

As the polymer produced from polymerization of such monomers, cross linking polyacryloiloxyethyl-trimethylammonium chloride polymer may be illustrated.

Referring to polymelization process and process to obtain averaged particle size under 1 μm, same method as is disclosed under the paragraph of anionic vinyl monomer may be made available.

As the cross linked high molecular compound with nonionic-group, cross linked polymer made of nonionic vinyl monomer and crosslinking agent to be used when required may be illustrated.

Nonionic vinyl monomer and crossliking agent to be used when required may be equivalence to those which are made available under the paragraph of cross linked high molecular compound with anionic-group.

Amount of crossliking agent to be used when required is less than 10% the total weight of polymer.

As the polymers produced from polymerization of such monomers, cross linked polyacrylamide and polyhydroxy ethyl acrylate are illustrated.

Referring to polymerization process and process to obtain averaged particle size under 1 $\mu$m, same method as is disclosed in the paragraph of anonic vinyl monomer may be made available.

As cross liked amphoteric highmolecular compound with both anionic groups and cationic groups, cross linked polymer made of anionic vinyl monomer and cationic vinyl monomer together with nonionic vinyl monomer and crossliking agent to be used when required may be illustrated. Anionic vinyl monomer, cationic vinyl monomer, nonionic vinyl monomer and crosslinking agent may be equivalent to those disclosed in the above, the latter two being made available when required.

For the amphoteric water absorbent resin particles under the present invention, the mole ratio of cationic vinyl monomer to anionic vinyl monomer can vary depending on water absorbency and hydrogel strength, desired in the range of 85:15 to 15:85, preferably 70:30 to 30:70.

In addition the sum of cationic vinyl monomer and anionic vinyl monomer normally exceeds 10 mole %, preferably 50 mole % the total weight of polymer.

The amphoteric cross linked polymer from acryloiloxyethyltrimethylammonium chloride and acrylic acid at a mole ratio of 1:1 is typical of such kinds.

Referring to polymerization process and process to obtain averaged particle size under 1 $\mu$m, same methods as is disclosed in the paragraph of anionic vinyl monomer may be made available.

As the water absorbent resin particles with an averages particle size under 1 $\mu$m to be dispersed within thermoplastic resin or solvent soluble resin, at least one kind of water absorbent resin particles may be chosen depending on the purpose intended.

Where a moulded articles with higher water absorbency is desired, cross linked anionic high molecular compound is preferably made in use, and where the one with salt resistant higher water absorbency is desired, an amphoteric one is preferred.

In addition the water absorbent resin particles to be dispersed may not always be in a dried state but be in a state containing water where appropriate.

The surfactant disclosed under the present invention serves to allow the water absorbent resin particles to be dispersed more easily in thermoplastic resins or solvent soluble resins and to enhance the compatibility of the water absorbent resin particles.

The averaged particle size under 1 $\mu$m of the water absorbent resin particles well serve to reduce the loss of hydrogel from moulded particles. In fact the loss of hydrogel is found almost undetachable. However, suitable dosage of surfactant may be made in use, specially where less polarity or compatibility prevails in thermoplastic resins or solvent soluble resins such as polyethylen. For this purpose surfactants having HLB value of 1 to 15, preferably 1.5 to 12 are considered suitable. Where HLB value were less then 1 or exceed 15, the compatibility would not be improved.

As long as HLB value is kept confined within the range of 1 to 15, any kind of surfactant may be made available. For example, ethylen oxide adduct of alkylphenol, ethylen adduct of higher alcohol, ethylen oxide adduct of polypropylene glycol, polyethylen-glycol ester of fatty acid are typical for this purpose.

Dosage of surfactant which to be used when required can vary depending on the property of themoplastic resins or solvent soluble resins. It is normally ranged from 0.5 to 200% preferably 1.0 to 150 % the total weight of water absorbent resin particles, as long as the averaged particle size is maintained less than 1 $\mu$m. Dosage of less than 0.5% would cause the loss of hydrogel to be increased, and a dosoge of more than 200% would not improve the effect any more.

Referring to the thermoplastic resins or solvent soluble resins, they are not specifically defined and any type resins available in the market will serve well for the purpose intended, so long as they are adequately mouldable for moulding process. Polyolefin resins [e.g. polyethylen, polypropylene, polyvinyl chloride, chlorinated, polyethylen ethylen-vinyl acetate copolymer (EVA), maleicated EVA, saponified of EVA, ethylen (meth)acrylic acid copolymer, ethylen (meth)acrylic acid ester copolymer, polstyrene, polyvinylalcohol (PVA), etc.], polyester resins [e.g. polyethylenterephthalate, etc.], polyacrylonitril resins, polyurethan resins, polyamide resins, rubbers [e.g. synthetic rubbers such as butyl rubber, isoprene rubber, butadiene rubber, chloroprene rubber, stylene-butadiene copolymeric rubber and natural rubber], natural resin [e,g beeswax, beef fat etc.], fatty acid ester with long chain, adduct of polyalkylene oxide [e.g. polyethylenglycol, ethylen oxide adduct of higher alcohol etc.] are illustrated as typical examples. PVA, saponified EVA, polyacrylonitril resines etc. may be made solved in any kind of proper solvent when used.

These resins may be made available in single or mixed together depending on the purpose intended.

Word "solvent" which is mentioned above, means any kind of solvent which is capable to make resin dissolved. Aromatic solvent [benzene, toluene, xylene, etc.], hydro carbon type solvent [hexane, cyclohexane, etc.]. polar solvent [water, acetone, methanol, N,N-dimethylformamide (DMF), dimethylsulfoxide (DMSO), etc.] are considered typical.

Weight ratio of water absorbent resin particles to thermoplastic or solvent soluble resin may be fixed depending on the absorbency and mouldability and normally renged from 3:97 to 80:20.

Where the ratio were found less than 3, the absorbency would become remarkably reduced, in where 80 were exceeded, it is inferior in the mouldability.

As a typical example of the mouldable water absorbent resin compoision, EVA in which cross linked polymer of sodium acrylate is made dispersed using sorbitanmonostearate ("SPAN 60" trade name of nonionic surfactant produced by Sanyo Chemical Ind. Ltd.), polyethylene composition in which cross linked amphoteric high molecular compound from sodium acrylate and acryloiloxyethyltrimethylammonium cholride is made dispersed using adduct of nonylphenolethylenoxide, etc. may be illustrated.

Referring now to the dispersing method of water absorbent resin particles with averaged particle size under 1 $\mu$m within thermoplastic resins or solvent soluble resins, following procedures are found typical;

(1) Water absorbent resin emulsion upon completion of reverse phase emulsifying polymerization is made dispersed with the aid of surfactant when required within thermoplastic resins or solvent soluble resins which is heat melted with the aid of solvent when required. And them solvent is removed.

(2) Water absorbent resin particles or powder obtained through reverse phase emulsifying polymerization or other polymerization and disintegration into a particle size less than 1 $\mu$m is made dispersed with the aid of surfactant when required within thermoplastic resins or solvent soluble resins which are heat melted with the aid of solvent when required which to be removed later upon completion of process operation.

(3) Water absorbent resin particles or powder with an averaged particle size less then 1 $\mu$m and thermoplastic resins pellet are intermixed with the aid of surfactant when required, so as to be blended thereupon.

The above dispersion process may be taken place before the moulding process or taken place contemporaneous with the latter. Whereby the product resulted may be in a shape of pellet, bar, sheet, etc.

Those moulded articles which contains water absorbent resin particles with averaged particle size less than 1 $\mu$m being dispersed therein show a water absorbency of 10 to 80000% base on the own weight at the moulded state, preferably 10 to 50000% and the loss of hydrogel from the moulded articles is less than 10% at the equilibrated state of water content. A water absorbency less than 10% is in sufficient to provide absorbing capability required for products in various application. In contrast, water absorbency exceeding 80000% would result in a weekend product which is no longe usable in practice. Loss of hydrogel exceeding 10% would adversely affect about surface feeling and the time-dependent stability of water absorbency. Therefore, it is not suitable for practical use.

Composition disclosed under the present invenition may be made moulded into any of powder, pellet, bar, film, sheet, fiber, etc.

No specific methods are defined under the present invention for the moulding process, but ordinary processes [e,g. granulator, pelletizer, melting extruder, calender roll, casting machin, etc.] may be made available for (1) moulding thermoplastic resin or solvent soluble resin containing water absorbent resin particles being dispersed therein, or (2) causing water absorvent resin particles to disperse in thermoplastic resin or solvent soluble resin and moulding thereof concurrently.

Water absorbent resin particles and thermoplastic resin or solvent soluble resin disclosed under the present invention may be added with orgnic powder materials (e,g. pulp-powder, starch, cellulose derivative, natural polysaccharide, etc.) and inorganic powder materials (e,g. permilite, zeolite, silica, permiculite, bentonite, talc, activated carbon, etc.) as fillers or additives in a suicable amount if necessary.

In addition anti-oxydation agent, plasticizer, mold preventive agent, dyestoff, pharmaceutical component, perfume, etc. may be added thereto.

Amount of these agent is normally less than 10 weight % of the total weight of mouldable water absorbent composition.

[Advantageous effct by the invention]

The mouldable water absorbent resin composition under the present invention provides following advantages;

(1) It is mouldable in any type of shape.

(2) Under the state of the moulded shape, it shows an excellent water absorbency.

(3) Loss of hydrogel upon absorption of water is maintained in a lower level, so that stable water absorbency is kept and feeling of surface or safety to human skin is improved.

(4) Gel-strength upon absorption of water is higher than of that pure water absorbent resin particles.

Based on the aforementioned advantages it may be made available in various applications, e.g.

foodstuff, film used in agriculture, water barrier for civil engineering field, water absorbent materials such as water absorbent fiber, toy, sanitary napkin, concrete curing sheet.

Cross-linked high molecular compound with anionic, cationic group or amphoteric compound contains in itself ion-group.

Accordingly hydrogel thereof will release the absorbed water and become contracted. In contrast, it absorbs water and becomes swelled when potential removed. The above response can occur repeatedly (Y. OSADA, Adv. Poly.) Sci., 82,1 (1987)).

The mouldable water absorbent resin will function as aforesaid, when it contains ion-group and hence be applicable to those applications which rely on the aforementioned function (e.g. dehydration sheet for sludge processing, artificial muscle actuator, solar pond, etc.)

[Preparation Example of water absorbent resin particles]

The water absorbent resin particles disclosed under the prosent invention is described by way of some exemplary manufactoring processes, however, it is understood that the those resin under the present invention is not defeined by the descriptions that follows.

The word "part" means part in weight.

The particle size of the water absorbent resin particles was measured through the wet-type super centrifugal precipitation method (Super centrifugal precipitator "CAPA-700" manufactured by Horiba-Seisakusho).

The water absorbency of the water absorbent resin particles was measured through extinction method incorporating blue-dextrin solution in water (refer to Japanese patent laid-open publication No. 54251/1987), though others are also applicable thereto.

The said extinction method relies on the following principle.

Blue dextrin is unable to be absorbed by water absorbent resin perticles due to its high meleculor property. Accordingly the concentration of blue dexting will vary depending on the water absorption by the resin particles. Where variation of concentration is then measured through extinction method, water absorption in question may be calculated from the extinction resulted thereby.

a) Preparation of blue dextrin aqueous solution:

0.3 parts of blue dextrin is made dissolved in 100 parts of 0.003 wt % of benzeyl trimethyl ammonium hydroxide ["Triton X 100" (tradename) ] (TO) solution in water so as to obtain 0.03 wt % of blue dextrin (BD) solution.

b) Equilibrium of water absorbent resin in water:

20 parts of blue dextrin (BD) solution and 20 parts of TO solution in water are added with 0.01 to 0.2 parts of water absorvent resin particles, and then allowed to be equilibrated in water content for 2 hrs. under agitation. Upon completion of equilibrium, the suspension resulted is subjected to centrifugation to have the resulted supernatant removed.

c) Measurement of water absorbency

The water absorbency is determined by measuring extinction of the supernatant using spectrophotometer with an accuracy of 0.001. The water absorbency is calculated through following equation. Water absorbency (g/g) = {(Weight of BD solution)/(Weight of water absorbent resin particles)} $\times$ [1-{(Extinction of BD solution) / (Extinction of BD supernatant - Extinction of TO supernatant)}] Preperation Example 1

400 parts of cyclohexane and 26 parts of sorbitan monostearate ("SPAN 60" nonionic-surfactant manufactured by Sanyo Chemical Ind. Ltd.) being dissolved under 50 °C in a flask of reactor was subjected to nitrogen substitution.

0.01 part of azoisobutylonitrile (AIBN) was put into the flask and 30 parts out of 200 parts of sodium acrylate (neutrality 74 mole %) 45 wt % monomer solution in water containing N,N'-methylenbisacrylamide (0.02 wt % of monomer) were allowed to drop thereon.

30 minutes later the solution turned to blue white in color, indicating that polymerization has started.

1 hr. after from the complection of the dropping, 0.05 parts of AIBN was added to reactor and the remnont of monomer solution in water was allowed to drop for 1.5 hrs.

Upon completion of aging continued under 60 °C for 1 hr. water in polymer micell was removed under azeotropic condition using solvent reflux, resulting in a emulsion (A) cyclohexane solution with the water absorbent resin being dispersed therein.

Water absorbent resin content in emulsion (A) was 18 wt %.

Averaged particle size of water absorbent resin was 0.2 $\mu$m.

The emulsion (A) was further processed through supercentrifugation so as to yield solid of the water absorbent resin particles.

EP 0 489 967 A1

Water absorbency of the said resin solid measured to 400 g/g. Preperation Example 2

310 parts of cyclohexane, 20 parts of sorbitan monostearate ("SPAN 60") as emulsifier, and 155 parts of emutsion (A) prepared the Preparation Example 1 being dissolved under 50°C in a flask of reactor was subjected to nitrogen substitution.

0.01 parts of AIBN was put in the flask and 25 parts out of 82 parts of a aryloiloxyethyltrimethyl-anmonium chloride 80 wt % solution in water containing N,N'-methylen-bis-acrylamide (0.02 wt% of monomer) were allowed to drop thereon.

1 hr. later, 0.05 parts of AIBN were poured into the flask and the remnant of monomer solution in water were allowed to drop for 1 hr.

Upon completion of aging continued under 60 °C for 1 hr. dehydration took place under azeotropic condition using solvent reflux, resulting in an emulsion (B) cyclohexane solution with the water absorbent resin comprizing cross linked anionic high molecular compound and cationic high molecular compounds in 2 layers being dispersed therein.

Water absorvent resin particles content in emulsion (B) was 15 wt %.

Averaged particle size of water absorbent resin was 0.4 $\mu$m.

The emulsion (B) was further processed through supercentrifugation so as to yield solid of the water absorbent resin particles.

Water absorbency of the said resin solid measured to 280 g/g. Preparation Example3

40 parts of water absorbent resin fine powder available in market ["Sunwet 1M-300 MPS", manufactured by Sanyo Chemical Ind. Ltd.] (particle size 10 to 30 $\mu$m), 10 parts of "SPAN 60" and 160 parts of cyclohexane being put into a vessel were processed using ultrasonic homoginizer under 20 °C for 4 hrs., resulting in emulsion (C) cyclohexane solution.

Solid content of water absorbent resin particles in emulsion (C) was 19 wt %.

Averaged particle size of water absorbent resin was 0.9 $\mu$m.

The emulsion (C) was further processed using supercentrifugation so as to yield water absorbent resin solid.

Water absorbency of the said resin solid measured to 580 g/g. Preparation Example 4

10 parts of solid of water absorbent resin particles yielded from emulsion (A) in the Preparation Example 1 were allowed to be dispersed in 30 parts of cyclohexane, then further disintegrated using ultrasonic homoginizer under 20 °C for 1 hr., resulting in emulsion (D) cyclohexane solution,

Water absorbent resin solid content in emulsion (D) was 25 wt%.

Averaged particle size of water absorbent resin was 0.9 $\mu$m.

[Example]

Mouldable water absorbent resin compositions under the present invention is described here by way of examples, but it is understood that the invention is not limited thereto.

The word "part" means part in weight.

Water absorbenty of the mouldable water absorbent resin composition under the present invention was measured using weight variation method.

The said method relies on the following principle : 5g of specimen in a Nylon sack of 250 mesh were left immersed in ion exchange water for 10 hrs. Upon completion immersion, the sack containing the specimen was taken out, then water was drained therefrom for 15 minutes, thereafter the sack containing the specimen was weighed.

The resulted weight increment multiplied by 1/5 × 100 is equivalent to water absorbency in question ( % of own weight ).

Loss of hydrogel comprising the water absorbent resin particles that occurs while in water absorption of the mouldable water absorbent resin composition under the present invention was evaluated through evaporation residual method.

The said method relies on the following principle; Upon determination of water absorbency of the specimen using weight variation method, the specimen is filtrated using stainless steel net of 80 mesh. The resulted filtrate is dried into solid matter through evaporation. The resulted residual solid is weighed. Loss of hydroge is evaluated as follows :

Loss (%)= weight of residual solid × (100/5) × weight of solid content of water absorbent resin particles in the moulable water absorbent resin composition.

Example 1

8

300 parts of toluene and 100 parts of low density polyethylene (product by Mitsubishi Petrochemical Co., Ltd. "LED polyethy") were dissolved in a vessel under 80 °C. 130 parts of emulsion (A) were allowed to drop thereon so as to become mixed and dispersed therein.

The resulted suspensoid was allowed to be spread over a separation paper followed by drying and crushing. A mouldable water absorbent resin composition (E) with the water absorbent resin particles being dispersed in polyethylene was thus obtained. Properties of the film obtained through inflation moulding of the composition (E) by brabender moulder is shown in table 1 in term of water absorbency and lost of hydrogel.

Example 2

Through the same procedure as in the example 1 except that 260 parts of emulsion A was used instead of 130 parts of emulsion (A), mouldable water absorbent resin composition (F) under the present invention was obtained.

Properties of the film obtained through inflation moulding by brabender moulder of the composition (F) is shown in Table 1 in term of water absorbency and loss of hydrogel.

Example 3

300 parts of toluene and 100 parts of copolymer from ethylene and vinyl acetate (EVA) (product by Mitsubishi Petrochemical Co., Ltd. "polyethy EVA 25K" ; vinyl acetate content 11 % ) were dissolved in a vessel under 80 °C, 260 parts of emulsion (A) were allowed to drop thereon so as to become mixed and dispersed therein.

The resulted suspensoid was allowed to be spread over a separation paper followed by drying and freeze-crushing. A mouldable water absorbent resin composition (G) with the water absorbent resin particles being dispersed in EVA was thus obtained. Properties of the film obtained through inflation moulding by brabender moulder of the composition (G) is shown in Table 1 in term of water absorbency and loss of hydrogel.

Example 4

300 parts of toluene and 100 parts of copolymer from ethylene and vinylacetate (EVA) (product by Mitsubishi Petrochemical Co., Ltd. "polyethy X700": vinyl acetate content 33 %) were dissoved in a vessel under 80 °C. 310 parts of emulsion (B) were allowed to drop thereon so as to become mixed and dispersed therein.

The resulted suspensoid was allow to be casted on a separation paper followed by drying. A mouldable water absorbent resin composition (H) with the water absorbent resin particles being dispersed in EVA film was thus obtained. The properties of the resulted film is shown in Table 1 in term of water absorbency and loss of hydrogel.

Example 5

Through the same procedure as in the example 3 except that 178 parts of emulsion (D) was used instead of 260 parts of emulsion (A), mouldable water absorbent resin composition (I) was obtained.

The properties of the resulted film is shown in Table 1 in term of water absorbency and loss of hydrogel.

Example 6

400 parts of dimethylsulfoxide and 100 parts of polyvinyl-alchohol (PVA) (product by Kuraray Co. Ltd. "Poval 217" ) were fully dissolved in a vessel and 245 parts of emulsion (C) were allowed to drop thereon so as to be mixed and dispersed therein.

The resulted suspensoid was allowed to be casted on a separation paper followed by drying. A mouldable water absorbent resin composition (J) with the water absorbent resin particle under the present invention being dispersed in PVA sheet was thus obtained. The PVA sheet resulted through heat treatment and cross linking of the composition (J). Properties of the PVA sheet are shown in Table 1 in term of water absorbency and loss of hydrogel.

Comparative example 1

Through the some procedure as in the example 3 except that 47 parts of "Sanwet IM-300 MPS" was used instead of 260 parts of emulsion (A). Product (K) with the water absorbent resin particles being dispersed in EVA film was obtained. The properties of the resulted film is shown in Table 1 in term of water absorbency and loss of hydrogel.

Table 1

| Specimen | water absorbency (%) | loss of hydrogel (%) |
|---|---|---|
| Example 1 | 20 | 0.1 |
| 2 | 45 | 0.3 |
| 3 | 80 | 0.1 |
| 4 | 560 | 0.5 |
| 5 | 70 | 1.0 |
| 6 | 1200 | 1.5 |
| Comporative example 1 | 30 | 15.5 |

**Claims**

1. A mouldable water absorbent resin composition comprising thermoplastic resin or solvent soluble resin and water absorbent resin particles dispersed therein, wherein said water abosrbent resin particles have average particle size of less than 1 $\mu$m under dried state and have water absorbency of from 10 to 1000g/g, wherein said resin compostion may be mouldable into any shape, its absorbable water content is equal to 10 to 80000 wt% based on its own weight at the moulded state and possible loss of hydrogel of said water absorbent resin particles from moulded resin composition is maintained to a level a less than 10 wt% at the equilibrated state in water content.

2. The composition of Claim 1, wherein said water absorbent resin particles are made dispersed using surfactant.

3. The composition of Claim 2, wherein the said surfactant is featured with a HLB value of 1 to 15.

4. The composition in any one of Claim 1 to 3, wherein said water absorbent resin particles comprising at least one crosslinked high molecular compound selected from the group consisting of a crosslinked high molecular compound having anionic group, a crosslinked high molecular compound having cationic group, a nonionic crosslinked high molecular compound and an amphoteric crosslinked high molecular compound having both anionic group and cationic group.

5. The composition in any one of Claim 1 to 4, wherein said water absorbent resin particles is the one may be obtained through reverse phase emulsifying polymerization.

6. The composition set forth in any one of Claim 1 to 5, wherein said composition have moulded shape of any of powder, pellet, bar, film, sheet or fiber.

7. The composition set forth in any one of Claim 1 to 6, wherein said water absorbent resin particles may be mixed with said thermoplastic resin or solvent soluble resin in a ratio of 3:97 to 80:20 in weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 647 364 (NIPPON GOHSEI KAGAKU KOGYO K.K.) * Page 4, lines 1-4,33-36; page 5, lines 30-36; page 6, lines 1-36; page 7, lines 1-13; page 8, lines 21-25 * | 1,2,3,4,5,7 | B 01 J 20/26 |
| A | EP-A-0 326 382 (ALLIED COLLOIDS LTD) * Page 2, lines 47-53; page 3, lines 19-27, 64-65; page 4, lines 1-59; page 5, lines 40-45; page 9, lines 2-4 * | 1,4,5,7 | |
| A | PATENT ABSTRACTS OF JAPAN, vol. 13, no. 379 (C-628)[3727], 22nd August 1989; & JP-A-1 129 087 (NIPPON SHOKUBAI K.K.) 22-05-1989 * Abstract * | 1 | |
| | | | TECHNICAL FIELDS SEARCHED (Int. Cl.5) |
| | | | B 01 J |

The present search report has been drawn up for all claims

| Place of search | Date of completion of the search | Examiner |
|---|---|---|
| THE HAGUE | 09-08-1991 | KERRES P.M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)